# FASCICULE DE BREVET EUROPEEN

(11) **EP 4 311 276 B1**
(45) Date de publication et mention de la délivrance du brevet: **11.03.2026**
(21) Numéro de dépôt: 23186460.4
(22) Date de dépôt: 19.07.2023
(51) Int. Cl.: H04W 4/021, H04W 4/80, G07C 9/22, G07C 9/28, G07C 9/29

(54) **PROCÉDÉ DE COMMUNICATION UTILISANT DES BADGES ÉLECTRONIQUES COMMUNIQUANT AVEC DES BALISES**
KOMMUNIKATIONSVERFAHREN MIT ELEKTRONISCHEN KARTEN, DIE MIT BAKEN KOMMUNIZIEREN
METHOD OF COMMUNICATION USING ELECTRONIC BADGES COMMUNICATING WITH BEACONS

(30) Priorité: 20.07.2022 FR 2207446
(43) Date de publication de la demande: 24.01.2024
(73) Titulaire: Scan-Match, 75013 Paris (FR)
(72) Inventeur: BOUCHET, Antoine, 75012 PARIS (FR)
(74) Mandataire: Lavoix

(56) Documents cités:
- US-A1- 2019 050 608
- US-A1- 2020 342 364

## Description

La présente invention concerne un procédé de communication utilisant des badges électroniques lors d'une réunion publique, lesdits badges échangeant des informations avec des balises présentes sur le lieu de la réunion publique.

Lors de certaines réunions publiques, des participants sont amenés à porter des badges mentionnant leur identité. Cela permet aux organisateurs de l'événement de pouvoir rapidement contrôler l'identité d'un participant, mais aussi aux différents participants de pouvoir échanger plus facilement entre eux.

Il est possible d'utiliser des badges électroniques, qui comportent une puce comportant un identifiant du badge. Cette puce permet au participant de s'identifier par simple présentation de son badge, par exemple pour pénétrer dans une zone à accès contrôlé.

Le document US 2020/342364 décrit un badge électronique pour un participant à une réunion.

Dans le cas d'une zone à accès contrôlé, un dispositif limitant l'accès comprend dans une base de données, les informations relatives au participant, notamment l'identifiant de son badge et son droit d'accès.

Un lecteur de badge présent sur le dispositif limitant l'accès scanne le badge et lit l'identifiant. En questionnant la base de données liée au dispositif, un microprocesseur dans le dispositif limitant l'accès détermine si le participant a le droit d'accéder à la zone. Le dispositif affiche alors le résultat de manière visible pour le participant.

Toutefois pour qu'un badge électronique affiche l'identité d'un participant, il faut l'inscrire de manière durable sur le badge. Cela présente comme désavantage de devoir refaire un badge pour chaque nouveau participant à la réunion publique. Or, certaines réunions sont des événements exceptionnels et le participant ne réutilisera pas le badge par la suite. Cela présente donc un coût supplémentaire et la création de déchets.

De plus, le badge électronique ne permet pas au participant de recevoir l'information relative à son droit d'accès, autrement qu'en interrogeant le dispositif.

Un but de l'invention est donc de proposer un badge plus commode d'utilisation.

A cette fin, l'invention porte sur un procédé de communication tel que décrit dans la revendication 1.

Chaque balise étant spécifique à une zone déterminée, les échanges entre le badge et chaque balise peuvent être différents en fonction de la zone. Cela permet avec le même dispositif d'offrir une grande variété de services.

Les participants sont identifiables visuellement grâce à leur badge, ce qui facilite l'échange d'informations entre différents participants et/ou entre un participant et un organisateur de la réunion publique.

La détection du signal de la balise par le badge est commode puisqu'elle rend inutile des infrastructures du type lecteur de carte à puce qui sont volumineuses et coûteuses.

Le stockage d'informations dans une mémoire du badge électronique permet au participant d'accéder à ces informations sans avoir à consulter un lecteur de badge ou un organe électronique type tablette ou ordinateur communiquant avec une base de données. Le participant est ainsi autonome.

De plus pour des organisateurs de la réunion publique, cela permet d'avoir une double confirmation en comparant l'information stockée dans le badge et l'information dans une balise.

La comparaison entre l'information stockée dans le badge et l'information dans la balise est facilitée par l'affichage des informations personnelles relatives à la zone sur le badge, visibles par les organisateurs.

Le procédé de communication peut en outre présenter une ou plusieurs caractéristiques additionnelles telles que décrites dans les revendications 2 à 10, considérées individuellement ou selon toutes les combinaisons techniquement possibles.

D'autres caractéristiques et avantages de l'invention ressortiront de la description détaillée qui en est donnée ci-dessous, à titre indicatif et nullement limitatif, en référence aux figures annexées, parmi lesquelles :
la figure 1 est une vue de face, d'un badge électronique ; et
la figure 2 est une représentation schématique simplifiée, d'une réunion publique avec des participants possédant des badges électroniques selon la figure 1 ; et
la figure 3 est un diagramme représentant le procédé de communication représenté schématiquement sur la figure 2.

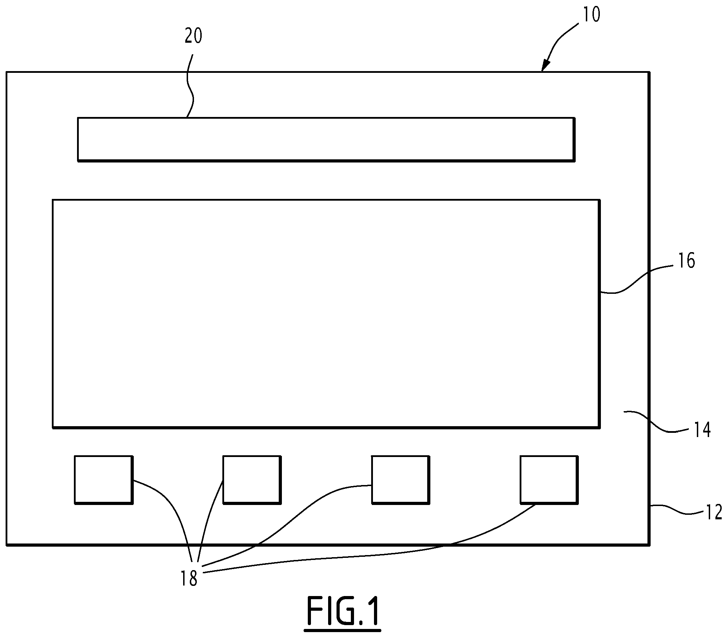

Le procédé de communication illustré sur les figures 1 à 3 est prévu pour être mis en œuvre dans une réunion publique.

Une réunion publique est un rassemblement de différents acteurs. Les acteurs sont composés d'au moins un organisateur et d'au moins un participant. L'organisateur prévoit au moins une activité dans le lieu de la réunion publique à laquelle le participant prend part.

La réunion publique est par exemple un salon professionnel ou non professionnel, une foire, une conférence, un festival, et tout autre type de manifestation rassemblant un grand nombre de personnes.

Le procédé utilise des badges électroniques d'identification 10 chacun associé à un participant.

Le badge 10 est prévu pour être porté de manière visible par le participant. Il permet aux autres participants d'identifier visuellement la personne qui porte le badge.

La figure 1 représente un badge électronique 10 comportant un boîtier 12 comprenant des composants internes non représentés et une surface extérieure 14 visible sur la figure 1.

Un système d'attache, par exemple un cordon, fixé à l'arrière du boîtier permet à un participant de porter le badge 10 sans difficultés. Le badge 10 peut également être attaché au participant à l'aide d'une épingle ou de tout autre moyen.

Le badge 10 comporte un écran d'affichage 16 des informations personnelles du participant et/ou d'informations concernant la réunion publique. La taille de l'écran 16 est au moins de quelques centimètres carrés permettant une lisibilité des informations personnelles du participant affichées sur le badge 10.

L'écran d'affichage 16 est de préférence un écran électrophorétique afin de limiter l'énergie dépensée par le badge 10 pour l'affichage.

Les informations personnelles affichées par le badge 10 sur l'écran 16 sont notamment des informations permettant d'identifier le participant telles que le nom, le prénom, la photo ou d'autres éléments pouvant figurer sur un document d'identité.

En outre, les informations personnelles comprennent avantageusement une ou plusieurs des informations ci-dessous : le numéro de vestiaire, les crédits restaurations, les droits d'accès d'un participant, la liste des contacts échangés.

Le boîtier 12 comporte également une mémoire dans ses composants internes. La mémoire stocke les informations personnelles du participant ainsi que l'identifiant du badge 10.

La mémoire est commandée par un microprocesseur intégré dans le boîtier 12. Les informations personnelles stockées dans la mémoire sont amenées à être modifiées au cours de la réunion publique par le microprocesseur.

Le boîtier 12 comporte aussi un émetteur, émettant un signal d'ondes radio ultra hautes fréquences, de préférence en bluetooth, à courte distance. Le signal communique l'identifiant et des informations personnelles du participant.

L'utilisation de cette bande de fréquence permet une indépendance du badge électronique 10 vis-à-vis de la connexion internet sur le lieu de la réunion publique. Les appareils électroniques échangeant les informations étant proches et les informations échangées peu volumineuses, le signal bluetooth permet d'avoir un échange d'informations garanti.

Le boîtier 12 comprend un récepteur d'ondes radio d'ultra hautes fréquences, similaires à celles envoyées par l'émetteur.

Le boîtier 12 comporte également une batterie non représentée, connectée électriquement au microprocesseur, à l'émetteur et au récepteur et assurant leur apport en électricité. La batterie a une autonomie de plusieurs heures, avantageusement d'une dizaine d'heures. Le badge 10 est ainsi opérationnel tout au long de la réunion publique et n'est chargé qu'entre les réunions.

La surface extérieure 14 du badge 10 comprend des boutons 18 actionnables par pression du participant. Les boutons 18 sont connectés électriquement au microprocesseur analysant la requête et répondant via l'écran d'affichage 16.

En variante, l'écran 16 est tactile et le participant interagit avec le badge 10 en appuyant directement sur l'écran 16.

La surface extérieure 14 comporte également un affichage 20 utilisant des diodes électroluminescentes (DEL ou LED en anglais). Les diodes présentent au moins deux couleurs d'affichage. L'affichage DEL 20 est alimenté par la batterie et est commandé par le microprocesseur.

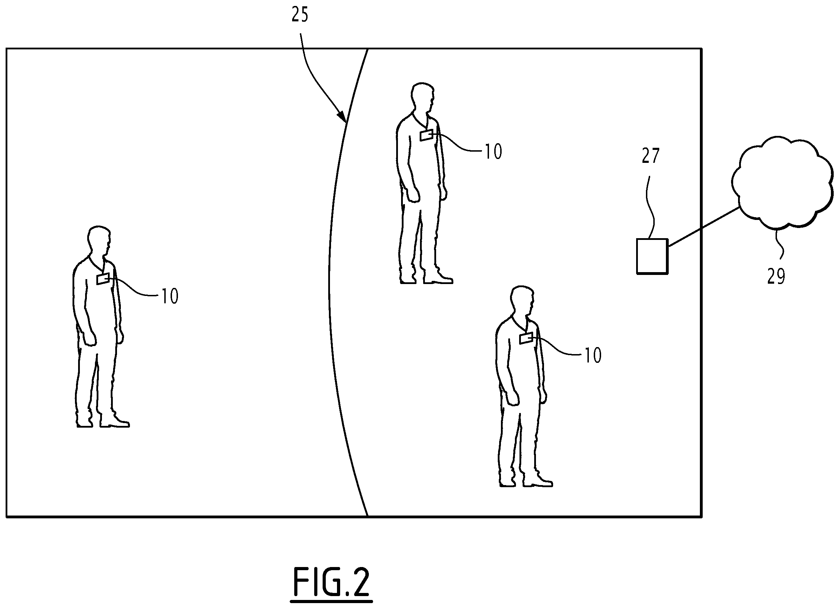

La figure 2 représente une réunion publique avec des participants évoluant dans une zone 25 dans laquelle est positionnée une balise 27.

La balise 27 est un dispositif électronique portable émettant un signal localement dans la zone 25, par exemple un téléphone portable, une tablette, un ordinateur portable ou tout autre dispositif électronique adapté.

La balise 27 comporte un boitier, et une mémoire dans le boîtier stockant des informations sur la réunion publique.

Ces informations comprennent notamment l'identité des participants, les informations personnelles des participants et l'identifiant de badge qui leur est associé.

La balise 27 comprend également un émetteur et un récepteur, non représentés.

La balise 27 comporte une batterie, dans le boîtier, connectée aux autres éléments et leur assurant un apport en électricité.

Les participants portent chacun un badge 10 affichant certaines des informations personnelles du participant permettant aux autres participants de l'identifier.

Dans une région de la réunion publique, la balise 27 est positionnée émettant un signal dans la zone 25 grâce à son émetteur. Le signal émis par la balise est similaire au signal émis par le badge. La balise 27 émet des ondes radio ultra hautes fréquences, de préférence en bluetooth. Les avantages du bluetooth sont identiques à ceux cités pour le badge 10.

Les badges 10 situés dans la zone 25 de la balise 27 reçoivent le signal de la balise 27 et interagissent avec elle.

Différentes zones 25 sont ainsi réparties dans le lieu de la réunion publique à des endroits stratégiques, notamment où les informations personnelles du participant ont besoin d'être partagées.

La balise 27 est configurée pour communiquer en permanence avec une base de données 29, notamment à l'aide d'une connexion internet. La balise 27 est configurée pour télécharger les informations provenant de la mémoire de la balise 27 dans la base de données 29 et vérifier que les informations stockées dans la balise 27 sont conformes à celles de la base de données 29. La balise est configurée pour modifier la mémoire de la balise 27 pour la rendre identique à la base de données 29, et/ou pour modifier la base de données 29 pour la rendre identique à la mémoire de la balise.

Lorsqu'une information diverge entre la mémoire de la balise 27 et la base de données, le microprocesseur de la balise analyse la date de modification de cette information. L'élément de la base de données 29 ou de la balise 27 ayant la date de modification la plus vieille des deux, est mis à jour en se basant sur l'information contenue dans l'élément ayant la date de modification la plus récente.

La mémoire présente dans la balise 27 permet en cas de coupure de connexion internet, que la balise 27 soit indépendante. La balise 27 fonctionne ainsi en toute circonstance.

La base de données 29 permet au participant d'accéder à ses informations personnelles même après la réunion publique sans accès à un badge 10. Le participant a en effet accès à un espace personnel lui permettant d'accéder à ses informations personnelles présentes sur la base de données 29.

La base de données 29 et toutes les balises 27 sont configurées pour communiquer de manière permanente, ce qui permet à un organisateur d'utiliser n'importe quelle balise 27 pour communiquer avec un badge 10.

L'information sur toutes les balises 27 est ainsi identique. Plus précisément, la base de données 29 et toutes les balises 27 sont configurées pour que, dès qu'une balise 27 met à jour une information dans sa propre mémoire, cette information soit téléchargée à la base de données 29 puis à toutes les autres balises 27.

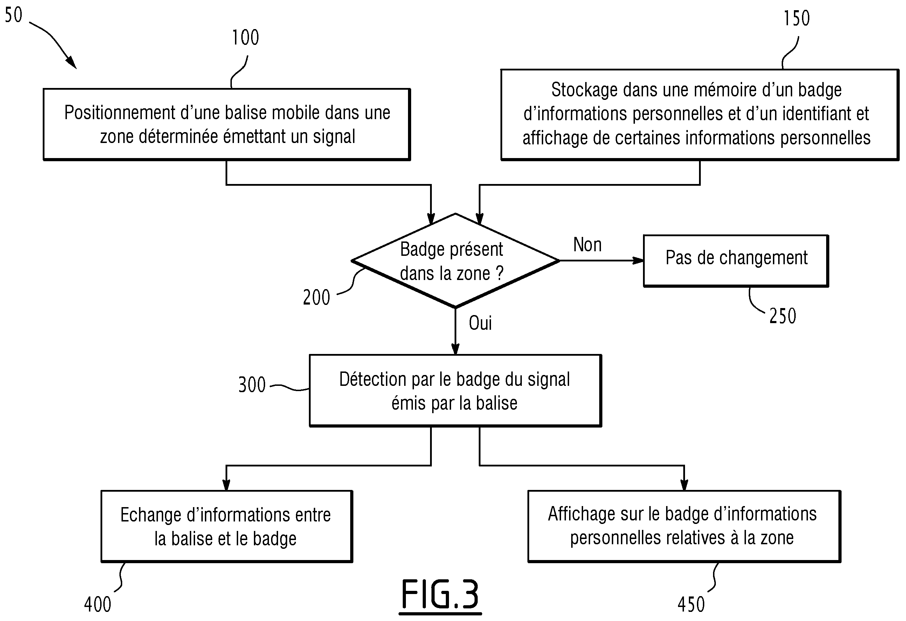

La figure 3 présente un logigramme du fonctionnement du procédé de communication 50 entre la balise 27 représentée figure 2 et le badge 10 représenté figure 1.

Ce procédé 50 va maintenant être décrit.

Au préalable, dans une première étape 100, la balise 27 est placée dans une zone déterminée 25 de la réunion publique.

Les zones privilégiées sont par exemple la zone de réception des badges 10 ou une zone donnant accès à un évènement réservé à certains participants.

Tout au long de la réunion publique, la balise 27 émet par son émetteur un signal spécifique à la zone déterminée 25, contenant un identifiant de zone par exemple.

Le procédé comprend également une étape 150 de stockage dans la mémoire du badge 10 du participant des informations personnelles du participant ainsi que de son identifiant.

Le badge 10 affiche certaines des informations personnelles du participant, permettant aux autres participants de l'identifier.

Lesdites informations personnelles sont affichées sur le badge 10 par l'intermédiaire de l'écran 16.

Lesdites informations personnelles affichées sont typiquement le nom et la photo du participant.

Dans un mode de réalisation, pour économiser de la batterie, les informations personnelles ne sont pas affichées en permanence sur l'écran 16 mais s'affichent par pression d'un bouton 18 présent sur le badge 10.

Dans une étape 200, le participant pénètre dans la zone 25 avec le badge 10.

Tant que le badge est extérieur à la zone, le signal émis par la balise 27 est trop faible et rien ne se passe, le procédé 50 restant à l'étape 250 tant que le badge 10 n'est pas présent dans la zone 25.

Le procédé comprend les étapes suivantes quand le participant se trouve dans la zone 25.

Dans une étape 300, le badge 10 détecte le signal émis par la balise 27.

Il détecte le signal à l'aide de son récepteur, et son microprocesseur procède à la lecture de l'identifiant du signal de la zone 25.

Le procédé comprend en outre, quand le badge 10 a détecté la balise 27, une étape 400 d'échange d'informations entre la balise et le badge, et/ou une étape 450 d'affichage sur le badge 10 d'informations personnelles relatives à la zone 25.

Au cours de l'étape 400, le badge 10 émet par son émetteur un signal contenant l'identifiant du participant. Dans le cas d'une zone 25 requérant des informations personnelles sur le participant, le signal émis par le badge 10 contient en plus des informations personnelles du participant.

En plus ou à la place des informations transmises par le badge, au cours de l'étape 400, l'échange d'informations entre la balise 27 et le badge 10 comprend avantageusement la transmission d'informations de la balise 27 au badge 10 pour modification de la mémoire du badge 10.

Dans l'étape 450, qui intervient par exemple simultanément à l'étape 400, le badge 10 affiche des informations personnelles du participant relatives à la zone déterminée 25.

Ces informations sont affichées à l'aide de son écran 16 et de ses diodes DEL 20.

Différents types de zones vont maintenant être décrites.

Dans le cas d'une zone 25 limitant l'accès à certains participants, la balise 27 est par exemple contrôlée par un organisateur de la réunion publique.

Lorsque le badge 10 reçoit le signal de la balise 27, à l'étape 400, le badge 10 envoie un signal comportant l'identifiant du participant 10 ainsi que ses droits d'accès à la zone 25. Simultanément, le microprocesseur, analyse l'identifiant de la zone reçue et détermine en fonction des informations personnelles du participant stockées dans la mémoire, si le participant a le droit d'accéder à la zone 25.

Si le participant a le droit d'accéder à la zone 25, à l'étape 450, le badge 10 allume une diode DEL verte. Si non, le badge allume une DEL rouge grâce à son affichage DEL 20. Le participant et l'organisateur ont ainsi l'information visuelle que l'organisateur ne doit pas autoriser le participant à passer.

La balise 27 reçoit le signal du badge 10 et compare l'identifiant du badge 10 avec sa mémoire et la base de données 29 pour déterminer si le participant a le droit d'accès à la zone déterminée 25. L'organisateur a ainsi l'information concernant les droits d'accès de tous les participants dans la zone 25.

Dans le cas où l'organisateur modifie le droit d'accès à la zone 25 dans la mémoire d'une balise 27, la base de données 29 est mise à jour pour être conforme à la mémoire de la balise 27. La balise 27 communique cette modification au badge 10 en émettant un signal spécifique à la zone déterminée 25 comportant en plus l'information du changement. Le badge 10 recevant l'information modifie les informations personnelles contenues dans la mémoire pour mettre à jour cette information.

Cela permet une flexibilité dans l'organisation de la réunion publique. Les organisateurs sur place sont habilités à modifier les autorisations immédiatement en fonction des places disponibles.

Dans le cas d'une zone 25 de vestiaire, après réception du signal caractéristique de la zone 25, à l'étape 400, le badge 27 renvoie son identifiant et son numéro de vestiaire.

Si le numéro de vestiaire est vide ou de valeur nulle, le procédé 50 se déroule comme suit. Une fois que le badge 10 et la balise 27 ont échangé leurs identifiants, la balise 27 envoie une information personnelle au badge 10 à stocker, son numéro de vestiaire. La transmission du numéro de vestiaire passe par un signal identique à celui utilisé pour communiquer l'identifiant de la zone déterminée 25. De la même façon, le badge 10 stocke cette information personnelle dans sa mémoire.

Si l'identifiant n'est pas vide ou non nul, la balise 27 transmet le numéro de vestiaire du participant à la balise 27 pour qu'il puisse récupérer ses affaires.

En parallèle, à l'étape 450, le badge 10 affiche le numéro de vestiaire du participant sur son écran 16. La balise 27 renvoie un signal au badge 10 pour mettre à jour la mémoire du badge 10 avec une nouvelle information. La balise 27 télécharge également l'information dans la base de données 29.

Dans le cas d'une zone 25 de restauration, le procédé 50 se déroule similairement à la zone de vestiaire avec à la place d'un numéro de vestiaire, un nombre de crédits de restauration.

Dans le cas d'une zone 25 d'arrivée, le participant n'a pas encore de badge 10 et un organisateur à l'aide d'une balise 27 initialise son badge 10. Cette opération précède l'étape 100.

Par une pression sur au moins un bouton 18 du badge 10, le microprocesseur du badge 10 affiche un code-barres sur son écran 16. L'organisateur à l'aide de la balise 27 intégrant un lecteur de code-barres, scanne le code-barres sur l'écran 16 du badge 10. La balise 27 se connecte ainsi au badge 10 et récupère ainsi l'identifiant du badge 10. La balise 27 transmet ensuite les informations personnelles du participant contenues dans la balise 27 ou dans la base de données 29. Une fois l'opération effectuée, l'organisateur remet le badge 10 au participant. La balise 27 télécharge alors l'identifiant du badge dans la base de données 29.

Dans le cas d'une zone 25 de sortie, le participant rend son badge 10 à un organisateur.

Par une pression sur au moins un bouton 18 du badge 10, le microprocesseur du badge 10 place le badge 10 dans un mode de récupération. Le badge 10 capte le signal émis par la balise 27 spécifique à la récupération de badges, à l'étape 300. Le badge 10 transfert alors toutes ses informations personnelles à la balise, à l'étape 400. Le badge 10 et alors en état rendu et a besoin d'être initialisé selon la méthode plus haut pour être de nouveau utilisable. La balise 27 télécharge toutes les informations du badge 10 dans la base de données 29 et la met à jour.

Dans le cas d'une zone 25 d'actualisation, le badge 10 se connecte à une balise 27 pour mettre à jour ses informations vis-à-vis de la base de données 29. Une fois leur identifiant échangés, à l'étape 400, la balise 29 transmet au badge 10 les informations personnelles du badge 10 pour comparaison par le microprocesseur et actualisation. Le badge 10 transfert à la balise 27 qui télécharge dans la base de données 29, les informations personnelles contenues dans la mémoire du badge 10.

Dans une zone 25 d'actualisation, la connexion entre une balise 27 et un badge 10 n'est réitérée avantageusement qu'au bout de quelques minutes. Après réception de l'identifiant du badge 10, à l'étape 400, la balise 27 stocke dans sa mémoire l'heure de la dernière actualisation et ne renvoie de signal au badge 10 que si l'heure de la dernière actualisation date de plusieurs minutes.

Cela permet d'économiser la batterie des appareils en évitant les envois de signaux dispensables.

Dans un autre mode de réalisation, par une pression sur au moins un bouton 18, les badges 10 envoient un signal contenant leur identifiant sans nécessairement la présence d'une balise 27 à proximité. Si au moins deux badges 10 sont à proximité et captent ce signal, les badges 10 peuvent se connecter l'un à l'autre.

Une fois leur identifiant échangé, les badges 10 s'échangent des informations personnelles telles qu'un nom, une entreprise et une carte de visite. Les badges 10 stockent ces informations personnelles dans leur mémoire. L'échange d'informations personnelles s'arrête lorsque l'au moins un bouton 18 est relâché.

Lors de la prochaine connexion avec une balise 27 dans une zone 25 d'actualisation, les informations personnelles récupérées lors de l'échange avec un autre badge 10 sont transférées à la balise 27 puis téléchargées dans la base de données 29.

L'échange de cartes de visite par rapprochement et pression sur un ou plusieurs boutons 18 permet aux participants de rapidement et facilement échanger leurs coordonnées et ainsi profiter de la réunion publique.

Le procédé de communication 50 présente de multiples avantages.

Quand l'échange d'informations entre la balise et le badge comprend le transfert de l'identifiant du participant par le badge vers la balise, la balise est informée que le participant est présent dans la zone. Ceci permet à l'organisateur de savoir à tout instant le nom des participants présents dans la zone.

Lorsque l'échange d'informations entre la balise et le badge comprend la transmission d'informations de la balise au badge pour modification de la mémoire du badge, le badge est ainsi modifiable avec l'accord d'un organisateur. Cela permet par exemple à l'organisateur de modifier une information erronée sur le badge du participant ou encore d'ajouter au participant de nouveaux droits d'accès. Le procédé est ainsi plus apte à réagir face à une situation.

Quand la balise télécharge des informations relatives au participant à une base de données, ces informations sont accessibles depuis l'extérieur de la réunion publique. Cela permet à un participant de retrouver ces informations même lorsque la réunion publique est terminée.

Quand le badge transfert vers la balise des informations personnelles du participant, notamment ses droits d'accès à la zone déterminée, ces informations sont partagées avec l'organisateur qui utilise la balise. Ce partage d'information facilite les interactions entre le participant et l'organisateur.

Lorsque le badge comporte un écran sur lequel s'affiche les informations personnelles du participant, le badge est très commode d'utilisation. L'écran permet d'afficher au moins les données d'identification du participant. Le badge devient facilement réutilisable.

La procédure d'initialisation du badge permet d'affecter très facilement un badge à un participant.

Quand la zone déterminée est une zone de contrôle d'accès, le signal émis par la balise contenant l'identifiant du lieu, le badge après réception du signal de la balise affichant en informations personnelles une information relative au droit d'accès du participant à ladite zone, le contrôle de l'accès des participant est grandement facilité. L'organisateur utilisant la balise peut commodément se rendre compte, visuellement, quels participants sont autorisés à accéder à la zone. Il lui suffit d'observer les badges des participants.

Quand le badge comporte une diode DEL commandée par un microprocesseur dans le badge électronique, la couleur de la diode caractérisant le droit d'accès du participant à la zone, l'organisateur doit simplement regarder la couleur de la diode DEL pour évaluer si le participant peut accéder à la zone.

La procédure de récupération des badges est également très commode.

Les badges peuvent être facilement utilisés pour échanger des données personnelles, type carte de visite, entre deux participants.

Le procédé de l'invention permet également de gérer très commodément des crédits de restauration.

Le procédé de communication 50 présente ainsi comme avantage d'accélérer de nombreuses étapes d'une réunion publique. La communication visuelle du badge suite à l'entrée dans une zone informe rapidement les organisateurs sur place.

Les participants ont aussi accès à un badge interactif 10 les renseignant sur le déroulement de la réunion publique. Les participants vérifient aussi facilement les informations renseignées par leur badge 10.

L'information stockée dans le badge 10 est modifiable à l'aide des balises 27 et cela permet une flexibilité aux organisateurs ainsi qu'aux participants.

L'affichage à l'aide d'un écran 16 assure également un contenu clair et visible.

Les badges 10 sont récupérables et réutilisables, ce qui limite les déchets et les coûts nécessaires à la création de nouveaux badges 10 à chaque nouvelle réunion publique.

## Revendications

1. Procédé de communication pour une réunion publique utilisant des badges électroniques d'identification (10) chacun associé à un participant, le procédé comprenant les étapes suivantes :
- positionnement d'une balise (27) mobile dans chaque zone parmi au moins une zone (25) déterminée de la réunion publique, chaque balise (27) émettant dans la zone déterminée (25) respective un signal émis spécifique à la zone déterminée (25) respective
- stockage dans une mémoire du badge (10) de chaque participant d'un identifiant et d'informations personnelles du participant, le badge (10) affichant certaines des informations personnelles du participant permettant aux autres participants de l'identifier, telles que le nom et la photo ;
le procédé comprenant en outre les étapes suivantes quand le participant se trouve dans une zone particulière parmi l'au moins une zone déterminée (25):
- détection (300) par le badge (10) du signal émis par la balise (27) spécifique à ladite zone particulière ;
- quand le badge (10) a détecté la balise (27) spécifique à ladite zone particulière, échange (400) d'informations entre la balise (27) et le badge (10), et/ou affichage (450) sur le badge (10) d'informations personnelles relatives à la zone (25) ;
l'au moins une zone (25) déterminée comprenant une zone de récupération des badges (10),
le procédé comprenant en outre les étapes suivantes lorsque ladite zone particulière est la zone de récupération des badges (10) :
- par une pression sur au moins un bouton (18) du badge (10), placement, par un microprocesseur du badge (10), du badge (10) dans un mode de récupération ;
- suite à la détection (300), par le badge (10), du signal émis par la balise (27) spécifique à ladite zone de récupération des badges, transfert (400), par le badge (10), de toutes les informations personnelles du participant à ladite balise (27), le badge (10) étant alors dans un état rendu, cet état nécessitant une initialisation avant une nouvelle utilisation du badge (10) ; et
- suite à ce transfert, téléchargement par la balise (27) spécifique à ladite zone de récupération des badges de toutes lesdites informations personnelles dans une base de données (29) et mise à jour de la base de données (29) par ladite balise (27).

2. Procédé de communication selon la revendication 1, dans lequel l'échange d'informations entre la balise (27) et le badge (10) comprend :
- transfert de l'identifiant du participant par le badge (10) vers la balise (27).

3. Procédé de communication selon la revendication 1 ou 2, dans lequel l'échange d'informations entre la balise (27) et le badge (10) comprend :
- transmission d'informations de la balise (27) au badge (10) pour modification de la mémoire du badge (10).

4. Procédé de communication selon l'une quelconque des revendications précédentes, dans lequel le badge (10) comporte un écran (16) sur lequel s'affichent les informations personnelles du participant.

5. Procédé de communication selon l'une quelconque des revendications précédentes, dans lequel l'au moins une zone déterminée (25) comprend une zone de contrôle d'accès, le signal émis par la balise (27) spécifique à ladite zone de contrôle d'accès contenant un identifiant du lieu, le badge (10) après réception du signal de la balise (27) spécifique à ladite zone de contrôle d'accès affichant en informations personnelles une information relative au droit d'accès du participant à ladite zone de contrôle d'accès (25).

6. Procédé de communication selon la revendication 5, dans lequel le badge (10) comporte une diode DEL (18) commandée par un microprocesseur dans le badge électronique (10), la couleur de la diode (18) caractérisant le droit d'accès du participant à la zone (25).

7. Procédé de communication selon la revendication 4, dans lequel l'au moins une zone déterminée (25) comprend une zone d'initialisation du badge (10), dans laquelle le badge (10) est initialisé avant le stockage dans la mémoire du badge (10) de chaque participant d'un identifiant et d'informations personnelles du participant, en suivant les étapes suivantes :
- affichage sur l'écran (16) d'un code-barres ; et
- scan du code-barres par un lecteur de code-barres intégré dans la balise (27) spécifique à ladite zone d'initialisation du badge (10) ; et
- transmission d'informations personnelles de la balise (27) spécifique à ladite zone d'initialisation du badge (10) au badge (10).

8. Procédé de communication selon l'une quelconque des revendications précédentes, dans lequel l'au moins une zone déterminée (25) comprend en outre une zone de vestiaire dans laquelle les informations transmises de la balise (27) spécifique à ladite zone de vestiaire au badge (10) comportent un numéro de ticket de vestiaire pour inscription dans la mémoire du badge (10) comme information personnelle.

9. Procédé de communication selon l'une quelconque des revendications précédentes, dans lequel, précédant le positionnement d'une balise mobile (27), au moins deux badges (10) échangent des données en suivant les étapes suivantes :
- rapprochement des au moins deux badges (10); et
- émission par chaque badge (10) d'un signal d'identification du badge (10) ; et
- interception par chaque badge (10) des signaux d'autres badges (10) à proximité ; et
- une fois les au moins deux signaux détectés, échange d'informations personnelles, notamment des cartes de visite virtuelles, entre les au moins deux badges (10) ; et
- enregistrement en mémoire des informations personnelles échangées dans la mémoire des badges (10).

10. Procédé de communication selon l'une quelconque des revendications 3 à 9, dans lequel l'au moins une zone déterminée (25) comprend une zone d'accueil de restauration, dans laquelle les informations transmises de la balise (27) spécifique à la zone d'accueil au badge (10) contiennent un crédit de restauration pour inscription dans la mémoire du badge (10) comme information personnelle.

## Patentansprüche

1. Kommunikationsverfahren für eine öffentliche Versammlung unter Verwendung von elektronischen Identifizierungskarten (10), die jeweils mit einem Teilnehmer assoziiert sind, das Verfahren umfassend die folgenden Schritte:
- Positionieren einer mobilen Bake (27) in jedem von mindestens einem bestimmten Bereich (25) der öffentlichen Versammlung, wobei jede Bake (27) in dem jeweiligen bestimmten Bereich (25) ein Signal emittiert, das spezifisch für den jeweiligen bestimmten Bereich (25) emittiert wird;
- Speichern, in einem Speicher der Karte (10) jedes Teilnehmers, einer Kennung und von personenbezogenen Informationen des Teilnehmers, wobei die Karte (10) gewisse der personenbezogenen Informationen des Teilnehmers anzeigt, die es anderen Teilnehmern ermöglichen, ihn zu identifizieren, wie beispielsweise Name und Foto;
das Verfahren ferner umfassend die folgenden Schritte, wenn sich der Teilnehmer in einem besonderen Bereich des mindestens einen bestimmten Bereichs (25) befindet:
- Erkennung (300), durch die Karte (10), des Signals, das von der Bake (27) emittiert wird, die für den besonderen Bereich spezifisch ist;
- wenn die Karte (10) die für den besonderen Bereich spezifische Bake (27) erkannt hat, Austauschen (400) von Informationen zwischen der Bake (27) und der Karte (10) und/oder Anzeigen (450) auf der Karte (10) von personenbezogenen Informationen, die sich auf den Bereich (25) beziehen;
der mindestens eine bestimmte Bereich (25) umfassend mindestens einen Wiederherstellungsbereich von Karten (10),
das Verfahren ferner umfassend die folgenden Schritte, wenn der besondere Bereich der Wiederherstellungsbereich von Karten (10) ist:
- durch einen Druck auf mindestens eine Taste (18) der Karte (10), Versetzen, durch einen Mikroprozessor der Karte (10), der Karte (10) in einen Wiederherstellungsmodus;
- nach der Erfassung (300), durch die Karte (10), des Signals, das von der Bake (27) emittiert wird, die für den Wiederherstellungsbereich von Karten spezifisch ist, Übertragen (400), durch die Karte (10), aller
personenbezogenen Informationen des Teilnehmers an die Bake (27), wobei die Karte (10) dann in einem zurückgegebenen Zustand ist, wobei dieser Zustand eine Initialisierung vor einer neuen Verwendung der Karte (10) erfordert; und
- im Anschluss an diese Übertragung, Herunterladen, durch die Bake (27), die spezifisch für den Wiederherstellungsbereich von Karten ist, von
allen personenbezogenen Informationen in eine Datenbank (29), und Aktualisieren der Datenbank (29) durch die Bake (27).

2. Kommunikationsverfahren nach Anspruch 1, wobei der Informationsaustausch zwischen der Bake (27) und der Karte (10) Folgendes umfasst:
- Übertragen der Kennung des Teilnehmers durch die Karte (10) an die Bake (27).

3. Kommunikationsverfahren nach Anspruch 1 oder 2, wobei der Informationsaustausch zwischen der Bake (27) und der Karte (10) Folgendes umfasst:
- Übertragen von Informationen von der Bake (27) an die Karte (10) zur Modifikation des Speichers der Karte (10).

4. Kommunikationsverfahren nach einem der vorherigen Ansprüche, wobei die Karte (10) einen Bildschirm (16) umfasst, auf dem die personenbezogenen Informationen des Teilnehmers angezeigt werden.

5. Kommunikationsverfahren nach einem der vorherigen Ansprüche, wobei mindestens ein bestimmter Bereich (25) einen Zugangskontrollbereich umfasst, wobei das Signal, das von der Bake (27) emittiert wird, die spezifisch für den Zugangskontrollbereich ist, eine Ortskennung enthält, wobei die Karte (10) nach Empfangen des Signals der Bake (27), die für den Zugangskontrollbereich spezifisch ist, als personenbezogene Informationen Informationen über das Zugangsrecht des Teilnehmers zu dem Zugangskontrollbereich (25) anzeigt.

6. Kommunikationsverfahren nach Anspruch 5, wobei die Karte (10) eine LED-Diode (18) umfasst, die von einem Mikroprozessor in der elektronischen Karte (10) gesteuert wird, wobei die Farbe der Diode (18) das Zugangsrecht des Teilnehmers zu dem Bereich (25) kennzeichnet.

7. Kommunikationsverfahren nach Anspruch 4, wobei der mindestens eine bestimmte Bereich (25) einen Bereich zur Initialisierung der Karte (10) umfasst, in dem die Karte (10) vor dem Speichern einer Kennung und von personenbezogenen Informationen des Teilnehmers in dem Speicher der Karte (10) jedes Teilnehmers initialisiert wird, indem die folgenden Schritte ausgeführt werden:
- Anzeigen, auf dem Bildschirm (16), eines Strichcodes; und
- Scannen des Strichcodes durch ein Strichcodelesegerät, das in die Bake (27) integriert ist, die für den Initialisierungsbereich der Karte (10) spezifisch ist; und
- Übertragen von personenbezogenen Informationen von der Bake (27), die spezifisch für den Initialisierungsbereich der Karte (10) ist, an die Karte (10).

8. Kommunikationsverfahren nach einem der vorherigen Ansprüche, wobei der mindestens eine bestimmte Bereich (25) ferner einen Garderobenbereich umfasst, in dem die Informationen, die von der für den Garderobenbereich spezifischen Bake (27) an die Karte (10) übertragen werden, eine Garderobenticketnummer zum Schreiben in den Speicher der Karte (10) als personenbezogene Informationen umfassen.

9. Kommunikationsverfahren nach einem der vorherigen Ansprüche, wobei vor der Positionieren einer mobilen Bake (27) mindestens zwei Karten (10) Daten austauschen, indem die folgenden Schritte ausgeführt werden:
- Annähern der mindestens zwei Karten (10); und
- Emittieren eines Identifizierungssignals der Karte (10) für jede Karte (10); und
- Abfangen der Signale von anderen nahegelegenen Karten (10) durch jede Karte (10); und
- nach dem Erfassen der mindestens zwei Signale, Austauschen von personenbezogenen Informationen, einschließlich virtueller Visitenkarten, zwischen den mindestens zwei Karten (10); und
- Speichern der personenbezogenen Informationen im Speicher der Karten (10).

10. Kommunikationsverfahren nach einem der Ansprüche 3 bis 9, wobei der mindestens eine bestimmte Bereich (25) einen Gastronomieempfangsbereich umfasst, wobei die Informationen, die von der Bake (27), die spezifisch für den Empfangsbereich ist, an die Karte (10) übertragen werden, ein Gastronomieguthaben zum Schreiben in den Speicher der Karte (10) als personenbezogene Informationen enthalten.

## Claims

1. A communication method for a public meeting using electronic identification badges (10) each associated with a participant, the method comprises the following steps:
- positioning of a mobile beacon (27) in each zone among at least one determined zone (25) of the public meeting, each beacon (27) emitting in said determined zone (25) an emitted signal specific to the respective determined zone (25);
- storage in a memory of the badge (10) of each participant of an identifier and personal data of the participant, the badge (10) displaying some of the personal data of the participant, such as name and photo, allowing the other participants to identify said participant;
the method further comprising the following steps when the participant is in a particular zone among said at least one determined zone (25):
- detection (300) by the badge (10) of the signal emitted by the beacon (27) specific to said particular zone;
- when the badge (10) has detected the beacon (27) specific to said particular zone, exchange (400) of information between the beacon (27) and the badge (10), and/or display (450) on the badge (10) of personal data relating to the zone (25);
the at least one determined zone (25) comprising a return zone of the badges (10),
the method further comprising the following steps when said particular zone is said return zone of the badges (10):
- by pressing at least one button (18) of the badge (10), placement, by a microprocessor of the badge (10), of the badge (10) into a recovery mode;
- following the detection (300), by the badge (10), of the signal emitted by the beacon (27) specific to said return zone of the badges (10), transfer (400), by the badge (10), of all the participant's personal data to said beacon (27), the badge (10) then being in a returned state, this state requiring initialization before a next use of the badge (10); and
- following this transfer, uploading from the beacon (27) specific to said return zone of the badges (10) of all said personal data to a database (29) and update of the database (29) by said beacon (27).

2. The communication method according to claim 1, wherein the exchange of information between the beacon (27) and the badge (10) comprises:
- transfer of the participant's identifier by the badge (10) to the beacon (27).

3. The communication method according to claim 1 or 2, wherein the exchange of information between the beacon (27) and the badge (10) comprises:
- transmission of information from the beacon (27) to the badge (10), for modifying the memory of the badge (10).

4. The communication method according to any of the preceding claims, wherein the badge (10) includes a display (16) on which the personal data of the participant is displayed.

5. The communication method according to any of the preceding claims, wherein the at least one determined zone (25) comprises an access control zone, the signal emitted by the beacon (27) specific to said access control zone containing an identifier of the location, the badge (10) after receiving the signal from the beacon (27) specific to said access control zone displaying, as personal data, information relating to the access right of the participant to said access control zone (25).

6. The communication method according to claim 5, wherein the badge (10) includes an LED (18) controlled by a microprocessor in the electronic badge (10), the color of the diode (18) characterizing the access right of the participant to the zone (25).

7. The communication method according to claim 4, wherein the at least one determined zone (25) comprises an initialization zone of the badge (10), in which the badge (10) is initialized before the storage in the memory of the badge (10) of each participant, of an identifier and of personal data of the participant, following the following steps:
- display of a barcode on the display (16); and
- scan of the barcode by a barcode reader integrated into the beacon (27) specific to said initialization zone of the badge (10); and
- transmission of personal data from the beacon (27) specific to said initialization zone of the badge (10) to the badge (10).

8. The communication method according to any of the preceding claims, wherein the at least one determined zone (25) further comprises a coatroom zone in which the information transmitted from the beacon (27) specific to said coatroom zone to the badge (10) include a coatroom ticket number for being written into the badge memory (10) as personal data.

9. The communication method according to any of the preceding claims, wherein, prior to the positioning of a mobile beacon (27), at least two badges (10) exchange data by following the following steps:
- bringing the at least two badges (10) closer to one another; and
- emission by each badge (10) of a badge identification signal (10); and
- interception by each badge (10) of signals from other nearby badges (10); and
- once the at least two signals have been detected, the exchange of personal data, in particular virtual business cards, between the at least two badges (10); and
- storage in memory of the personal data exchanged in the memory of the badges (10).

10. The communication method according to any of claims 3 to 9, wherein the at least one determined zone (25) comprises a catering reception zone, the information transmitted from the beacon (27) specific to the catering reception zone to the badge (10) containing a catering credit for being written into the badge memory (10) as personal data.
